# EUROPEAN PATENT SPECIFICATION

(11) **EP 0 652 384 B1**
(45) Date of publication and mention of the grant of the patent: **08.04.1998**
(21) Application number: 94203056.0
(22) Date of filing: 20.10.1994
(51) Int. Cl.: F16D 3/00, F16D 3/06, F16D 3/207

(54) **Tripot universal joint**
Dreibein-Kreuzgelenk
Joint universel à tripode

(30) Priority: 09.11.1993 GB 9323048
(43) Date of publication of application: 10.05.1995
(73) Proprietor: Delphi France Automotive Systems, 92257 La Garenne-Colombes (FR); GENERAL MOTORS CORPORATION, Detroit Michigan 48202 (US)
(72) Inventor: Flaugher, David Charles, Midland, Michigan 48640 (US); Botti, Jean Joseph, Noissy le Grand F-93160 (FR); Farrell, Robert Clifford, Frankenmuth, Michigan 48734 (US)
(74) Representative: Denton, Michael John

(56) References cited:
- DE-A- 2 952 029
- DE-B- 1 252 476
- DE-C- 3 832 191
- FR-A- 2 448 658
- US-A- 2 787 144
- AUTOMOTIVE ENGINEERING, vol.82, no.9, September 1974, DALLAS US pages 44 - 49 'PRIMER ON DRIVELINE SPLINES'

## Description

This invention relates to a universal joint of the tripot type for the transmission of torque between two rotatable shafts. The present invention has particular application in motor vehicles, and in particular for providing drive to steerable driven wheels on a motor vehicle.

It is well known to provide a universal joint of the tripot type between two rotatable shafts. A tripot joint typically comprises an outer housing or race connectable to one shaft, three radially extending trunnions connectable to the other shaft by way of a spider member which is splined to the other shaft, and rollers rotatable on the trunnions and axially slidable in channels in the outer housing. In such a tripot joint, numerous needle bearings are typically provided between each trunnion and its associated roller to provide the required stroking and angulation function between the two shafts. This arrangement has disadvantages in terms of the number of components and the dynamic interaction between the stroking and angulation functions. Examples of prior art arrangements can be found in EP-A-0244064; EP-A-0279127; and EP-A-0290142. FR-A-2448658 discloses a tripot joint in accordance with the preamble of Claim 1.

It is an object of the present invention to provide a universal joint which overcomes the above disadvantages.

To this end, a tripot universal joint for transmitting torque between two rotatable shafts in accordance with the present invention comprises a substantially annular outer housing connectable to one of the shafts; a substantially annular inner race positioned inside the outer housing and connectable to the other of the shafts, the inner race having three slots therein which extend longitudinally; a spider member positioned inside the inner race and having three trunnions each of which extend in a radial direction through one of the slots, the spider member being pivotable relative to the inner race; a roller ball rotatable on each trunnion and slidable in the respective slot; a substantially annular ball cage positioned between the inner race and the outer housing and secured to the trunnions; and a plurality of balls retained by the ball cage in longitudinally extending grooves in the outer housing, the balls being rotatable to allow the ball cage and the spider member to translate in a longitudinal direction relative to the outer housing.

The present invention provides the required stroking and angulation of a standard tripot universal joint, but minimises the interaction between these two functions by allowing the spider member to pivot relative the said other shaft, and allowing the spider member to easily translate relative to the outer housing. Further, the arrangement of the balls to provide translational movement considerably reduces the number of components compared to previous designs. This has benefits in terms of cost and ease of assembly.

The present invention will now be described, by way of example, with reference to the accompanying drawings, in which:-
Figure 1 is a cross-section of a tripot universal joint in accordance with the present invention, with the shaft connected to the inner race being omitted and the longitudinal axes of the inner race and outer housing being substantially aligned;
Figure 2 is a cross-section of the tripot universal joint of Figure 1 with the inner race being pivoted relative to the outer housing;
Figure 3 is a cross-section on the line III-III of Figure 1; and
Figure 4 is a cross-section of a modified arrangement of the tripot universal joint of Figures 1 to 3.

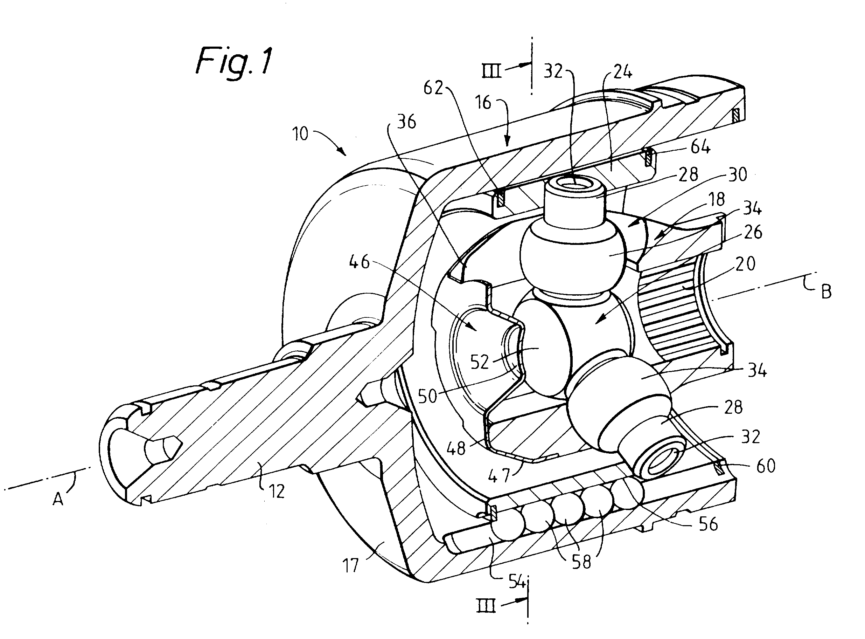

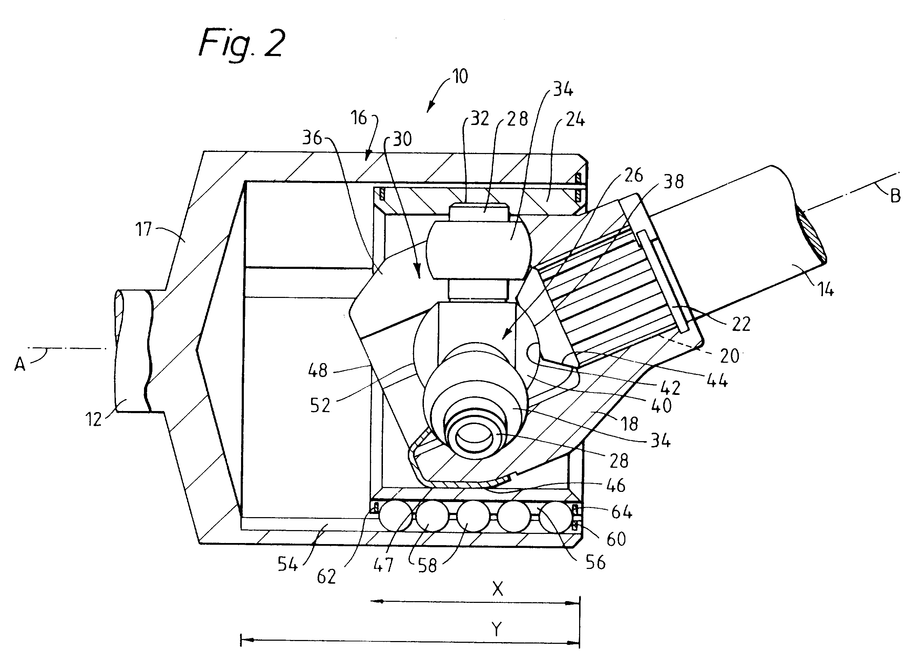

Referring to Figures 1 to 3, a tripot universal joint 10 in accordance with the present invention is usable for transmitting torque between two rotatable shafts 12, 14. The tripot universal joint 10 comprises a substantially annular or cylindrical outer housing 16 integrally connected to one shaft 12 by an end wall 17, and a substantially annular or cylindrical inner race 18 connected to the other shaft 14 by way of a splined connection 20. A C-clip 22 secures the connection between the other shaft 14 and the inner race 18 as is well known in the art. With this arrangement, the outer housing 16 and the shaft 12 are rotatable together about the longitudinal axis A of the shaft 12, and the inner race 18 and the other shaft 14 are rotatable together about the longitudinal axis B of the other shaft 14. The inner race 18 is positioned inside the outer housing 16, and a substantially annular or cylindrical ball cage 24 is positioned between the inner race and the outer housing. The ball cage 24 has an axial length X which is less than the axial length Y of the outer housing 16.

The tripot universal joint 10 further comprises a spider member 26 which is positioned inside the inner race 18, but which has three radially extending trunnions 28 which are substantially equidistantly spaced. The trunnions 28 extend through slots 30 formed in the inner race 18, and are secured (by any suitable means) at their free ends 32 to the ball cage 24. The slots 30 in the inner race 18 extend longitudinally substantially parallel to the longitudinal axis B of the other shaft 14. A roller ball 34 is positioned on each trunnion 28, is rotatable thereabouts, and is in contact with the walls 36 which define the corresponding slot 30. With this arrangement the inner race 18 can pivot relative to the spider member 26, the ball cage 24, and the outer housing 16. Consequently, the shaft 12 can pivot relative the other shaft 14.

The spider member 26 has a part-spherical surface 38 either formed integrally thereon or defined by a button member 40 secured thereto. The part-spherical surface 38 makes contact with a corresponding concave surface 42 formed on the end 44 of the other shaft 14 or integrally formed on the inner race 18. A spring retaining clip 46 comprising three arms 47 and a central portion 50 is secured by the arms to the inner race 18 at its end 48 remote from the other shaft 14. The central portion 50 of the spring retaining clip 46 engages the spider member 26 on the opposite side 52 to the part-spherical surface 38 to bias the part-spherical surface into contact with the concave surface 42. This arrangement retains the spider member 26 in the inner race 18 but allows the relative pivotal movement between the spider member 26 and the inner race 18. The opposite side 52 of the spider member 26 is preferably identical to the part-spherical surface 38 for ease of assembly of the tripot universal joint 10, and so as not to restrict the relative pivotal movement.

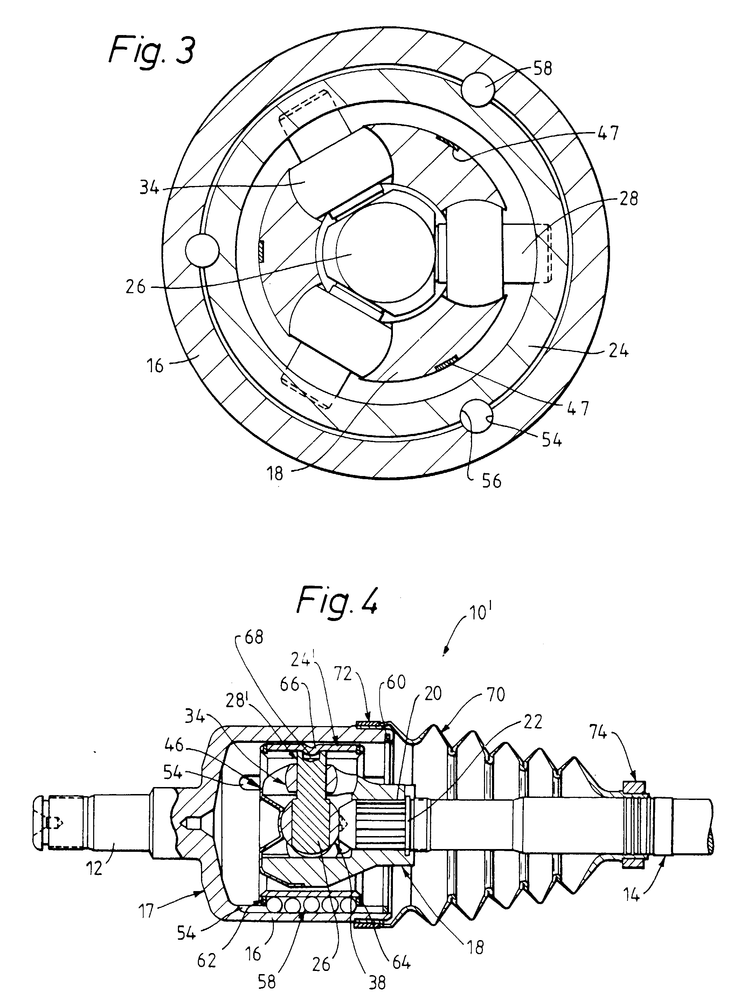

The outer housing 16 and the ball cage 24 have three corresponding grooves 54,56, respectively, formed therein. The grooves 54,56 extend longitudinally substantially parallel to the longitudinal axis A. The grooves 54,56 preferably have a substantially semi-circular surface. The grooves 54,56 are substantially equidistantly spaced apart in a circumferential direction, with the trunnions 28 positioned substantially centrally and substantially equidistantly between adjacent grooves 54,56, as can be seen in Figure 3. A number of balls 58 are retained in the grooves 54 in the outer housing 16 by the end wall 17 and a retaining ring 60, and in the grooves 56 in the inner race 18 by retaining rings 62,64. This arrangement allows the ball cage 24, the spider member 26, and the inner race 18 to translate relative to the outer housing 16 in a direction substantially parallel to the longitudinal axis A, to provide a telescopic relative movement between the shafts 12,14. Other forms of retention for the balls could be used, for example, the ends of the ball cage could be bent over to retain the balls.

In the modified embodiment shown in Figure 4, like parts have been given the same reference numerals as in Figures 1 to 3, but primed (') where modified. In this embodiment, the ball cage 24' is secured to the free ends 32' of the trunnions 28' by depressing a portion 66 of the ball cage into a depression 68 in the free end of each trunnion. The tripot universal joint 10' further comprises a boot seal 70 which is secured to the outer housing 16 and the other shaft 14 by ring clamps 72,74 respectively.

## Claims

1. A tripot universal joint (10) for transmitting torque between two rotatable shafts (12,14) comprising a substantially annular outer housing (16) connectable to one of the shafts; a substantially annular inner race (18) positioned inside the outer housing and connectable to the other of the shafts, the inner race having three slots (30) therein which extend longitudinally; a spider member (26) positioned inside the inner race and having three trunnions (28) each of which extend in a radial direction through one of the slots, the spider member being pivotable relative to the inner race; and a roller ball (34) rotatable on each trunnion and slidable in the respective slot; characterised by a substantially annular ball cage (24) positioned between the inner race and the outer housing and secured to the trunnions; and a plurality of balls (58) retained by the ball cage in longitudinally extending grooves (54) in the outer housing, the balls being rotatable to allow the ball cage and the spider member to translate in a longitudinal direction relative to the outer housing.

2. A tripot universal joint as claimed in Claim 1, wherein there are three longitudinally extending grooves (54) in the outer housing (16), the grooves being substantially equidistantly spaced apart.

3. A tripot universal joint as claimed in Claim 2, wherein the trunnions (28) are each positioned substantially centrally between adjacent grooves (54).

4. A tripot universal joint as claimed in any one of Claims 1 to 3, wherein the ball cage (24) has grooves (56) corresponding to the grooves (54) in the outer housing (16), the balls (58) being rotatable in both sets of grooves.

5. A tripot universal joint as claimed in any one of Claims 1 to 4, wherein retaining rings (60) retain the balls (58) in the grooves (54).

6. A tripot universal joint as claimed in any one of Claims 1 to 5, wherein the spider member (26) is retained in the inner race (18) by a spring retainer clip (46) which clips to the inner race.

7. A tripot universal joint as claimed in Claim 6, wherein the spring retainer clip (46) biases the spider member (26) into contact with the inner race (18) of the said other shaft.

8. A tripot universal joint as claimed in Claim 7, wherein the spider member (26) has a part-spherical surface (38) which contacts a corresponding concave surface (42) on the inner race (18) or an end of the said other shaft.

9. A tripot universal joint as claimed in Claim 8, wherein the part-spherical surface (38) is defined by separate button member (40) attached to the spider member (26).

## Patentansprüche

1. Tripoden-Universalgelenk (10) zum Übertragen von Drehmoment zwischen zwei drehbaren Wellen (12, 14), umfassend: ein im wesentlichen ringförmiges äußeres Gehäuse (16), das mit der einen der Wellen verbunden werden kann; eine im wesentlichen ringförmige innere Kugelschale (18), die innerhalb des äußeren Gehäuses positioniert ist und mit der anderen der Wellen verbunden werden kann, wobei in der inneren Kugelschale drei Schlitze (30) vorgesehen sind, die sich in Längsrichtung erstrecken; ein Gelenkkreuzelement (26), das innerhalb der inneren Kugelschale positioniert ist und drei Drehzapfen (28) aufweist, die sich jeweils in einer radialen Richtung durch einen der Schlitze erstrecken, wobei das Gelenkkreuzelement relativ zu der inneren Kugelschale schwenkbar ist; und eine Walzenkugel (34), die auf jedem Drehzapfen drehbar und in dem jeweiligen Schlitz verschiebbar ist; dadurch gekennzeichnet, daß ein im wesentlichen ringförmiger Kugelkäfig (24) zwischen der inneren Kugelschale und dem äußeren Gehäuse positioniert und an den Drehzapfen gesichert ist; und daß eine Vielzahl von Kugeln (58) in dem Kugelkäfig in sich in Längsrichtung erstreckenden Rillen (54) in dem äußeren Gehäuse gehalten ist, wobei die Kugeln drehbar sind, um zuzulassen, daß sich der Kugelkäfig und das Gelenkkreuzelement in einer Längsrichtung relativ zu dem äußeren Gehäuse bewegen.

2. Tripoden-Universalgelenk nach Anspruch 1, wobei es drei sich in Längsrichtung erstreckende Rillen (54) in dem äußeren Gehäuse (16) gibt und die Rillen im wesentlichen gleich voneinander beabstandet sind.

3. Tripoden-Universalgelenk nach Anspruch 2, wobei die Drehzapfen (28) jeweils im wesentlichen zentral zwischen benachbarten Rillen (54) positioniert sind.

4. Tripoden-Universalgelenk nach einem der Ansprüche 1 bis 3, wobei der Kugelkäfig (24) Rillen (56) aufweist, die den Rillen (54) in dem äußeren Gehäuse (16) entsprechen, wobei die Kugeln (58) in beiden Rillensätzen drehbar sind.

5. Tripoden-Universalgelenk nach einem der Ansprüche 1 bis 4, wobei Halteringe (60) die Kugeln (58) in den Rillen (54) halten.

6. Tripoden-Universalgelenk nach einem der Ansprüche 1 bis 5, wobei das Gelenkkreuzelement (26) in der inneren Kugelschale (18) durch eine Federhalteklammer (46) gehalten ist, die sich an die innere Kugelschale klammert.

7. Tripoden-Universalgelenk nach Anspruch 6, wobei die Federhalteklammer (46) das Gelenkkreuzelement (26) in Kontakt mit der inneren Kugelschale (18) der anderen Welle vorspannt.

8. Tripoden-Universalgelenk nach Anspruch 7, wobei das Gelenkkreuzelement (26) eine teilkugelförmige Oberfläche (38) aufweist, die mit einer entsprechenden konkaven Oberfläche (42) an der inneren Kugelschale (18) oder einem Ende der anderen Welle in Kontakt steht.

9. Tripoden-Universalgelenk nach Anspruch 8, wobei die teilkugelförmige Oberfläche (38) durch ein separates Knopfelement (40) definiert ist, das an dem Gelenkkreuzelement (26) angebracht ist.

## Revendications

1. Joint universel à tripode (10) pour la transmission d'un couple entre deux arbres rotatifs (12, 14) comprenant un boîtier externe sensiblement annulaire (16) susceptible d'être relié à l'un des arbres; une piste de roulement interne sensiblement annulaire (18) disposée à l'intérieur du boîtier externe et qui peut être reliée à l'autre arbre, la piste de roulement interne présentant trois fentes (30) qui s'étendent longitudinalement; un croisillon (26) disposé à l'intérieur de la piste de roulement interne et ayant trois tourillons (28) dont chacun s'étend dans une direction radiale à travers l'une des fentes, le croisillon pouvant pivoter par rapport à la piste de roulement interne; et une bille cylindrique (34) susceptible de tourner sur chaque tourillon et de glisser dans la fente respective; caractérisé par une cage à billes sensiblement annulaire (24) disposée entre la piste de roulement interne et le boîtier externe et fixée aux tourillons; et par une série de billes (58) retenues par la cage à billes dans des rainures longitudinales (54) du boîtier externe, les billes pouvant tourner pour permettre à la cage à billes et au croisillon d'effectuer une translation dans une direction longitudinale par rapport au boîtier externe.

2. Joint universel à tripode selon la revendication 1, dans lequel il y a trois rainures (54) qui s'étendent longitudinalement dans le boîtier externe (16), les rainures étant espacées l'une de l'autre sensiblement équidistantes.

3. Joint universel à tripode selon la revendication 2, dans lequel les tourillons (28) sont chacun disposés sensiblement au centre entre des rainures voisines (54).

4. Joint universel à tripode selon l'une quelconque des revendications 1 à 3, dans lequel la cage à billes (24) présente des rainures (56) correspondant aux rainures (54) du boîtier externe (16), les billes (58) pouvant tourner dans les deux ensembles de rainures.

5. Joint universel à tripode selon l'une quelconque des revendications 1 à 4, dans lequel des bagues de retenue (60) retiennent les billes (58) dans les rainures (54).

6. Joint universel à tripode selon l'une quelconque des revendications 1 à 5, dans lequel le croisillon (26) est retenu dans la piste de roulement interne (18) par une attache de retenue élastique (46) qui se clipse sur la piste de roulement interne.

7. Joint universel à tripode selon la revendication 6, dans lequel l'attache de retenue élastique (46) presse le croisillon (26) en contact avec la piste de roulement interne (18) dudit autre arbre.

8. Joint universel à tripode selon la revendication 7, dans lequel le croisillon (26) a une surface partiellement sphérique (38) qui vient en contact avec une surface concave correspondante (42) sur la piste de roulement interne (18) ou une extrémité dudit autre arbre.

9. Joint universel à tripode selon la revendication 8, dans lequel la surface partiellement sphérique (38) est définie par un élément en forme de bouton séparé (40) fixé au croisillon (26).
